# EUROPÄISCHE PATENTSCHRIFT

(11) **EP 2 003 414 B1**
(45) Veröffentlichungstag und Bekanntmachung des Hinweises auf die Patenterteilung: **19.07.2017**
(21) Anmeldenummer: 08400030.6
(22) Anmeldetag: 23.05.2008
(51) Int. Cl.: F28D 20/00

(54) **Be- und/oder Entladesystem und Verfahren zum Be- und/oder Entladen eines thermischen Energiespeichers mit einem zwischen den Diffusorplatten vorgesehenen Einsatz**
Charging and/or discharging system and method for charging and/or discharging a thermal energy storage with an insert provided between the diffuser plates
Système de charge et/ou de décharge et procédé de chargement et/ou de déchargement d'un accumulateur d'énergie thermique doté d'un insert entre les plaques du diffuseur

(30) Priorität: 12.06.2007 DE 102007027570
(43) Veröffentlichungstag der Anmeldung: 17.12.2008
(73) Patentinhaber: eins energie in sachsen GmbH & Co. KG, 09111 Chemnitz (DE); Technische Universität Chemnitz, 09111 Chemnitz (DE)
(72) Erfinder: Urbaneck Dr.-Ing, Thorsten, 09125 Chemnitz (DE); Uhlig, Ulf, 09236 Claussnitz (DE); Barthel, Uwe, 09127 Chemnitz (DE)
(74) Vertreter: Steiniger, Carmen

(56) Entgegenhaltungen:
- EP-A1- 1 076 219
- EP-A1- 1 489 374
- EP-A2- 0 928 940
- DE-A1- 3 819 317
- DE-U1- 9 001 675
- JP-A- S5 872 838
- JP-A- H11 281 274
- JP-A- 2002 022 382
- JP-A- 2002 243 375

## Beschreibung

Die vorliegende Erfindung betrifft ein Be- und/oder Entladesystem für einen thermischen Energiespeicher mit einem Flüssigkeitsbehälter mit wenigstens einem Flüssigkeitszulauf und wenigstens einem Flüssigkeitsablauf, wobei der Flüssigkeitszulauf und/oder der Flüssigkeitsablauf wenigstens eine Flüssigkeitsleitung aufweist, die in einen radialen Diffusor mündet, durch welchen Flüssigkeit in den oder aus dem Flüssigkeitsbehälter geleitet wird, und wobei der Diffusor einen zentral angeordneten und mit der Flüssigkeitsleitung verbundenen Diffusoranschlussbereich und sich radial von dem Diffusoranschlussbereich erstreckende, voneinander beabstandete Diffusorplatten aufweist.

In der Energiespeichertechnik gibt es verschiedene Prinzipien und Konstruktionen, um einen thermischen Speicher zu be- bzw. entladen. Man versucht dabei, mit speziellen Ladesystemen in dem thermischen Energiespeicher eine thermische Schichtung zu erreichen, so dass beispielsweise Flüssigkeit mit niedriger Temperatur im unteren Bereich des thermischen Energiespeichers vorhanden ist und sich Flüssigkeit mit hoher Temperatur im oberen Bereich des Energiespeichers befindet. Auch wenn hierbei in der Praxis keine ideale Schichtung von Flüssigkeit erreichbar ist, spricht man bei solchen Ladesystemen von Schichtenladevorrichtungen. Dabei sind Konstruktionen mit einer inneren Beladung als auch mit einer äußeren Beladung von thermischen Energiespeichern bekannt. Auch können physikalische Grundprinzipien genutzt werden, um Flüssigkeiten in Abhängigkeit von der Temperatur in einem thermischen Energiespeicher einzuschichten. Zudem kann die Anlagentechnik so ausgebildet werden, dass eine schichtweise Ladung bzw. Entladung eines thermischen Energiespeichers ermöglicht wird.

Um thermische Energie effizient und kostengünstig speichern zu können, arbeitet man daran, einfache Be- und Entladesysteme zur Verfügung zu stellen, die dennoch zuverlässig eine thermische Schichtung im Speicher bewirken und erhalten können. So sind verschiedenartige Schichtenladevorrichtungen bekannt, in welchen versucht wird, Schichtungen in thermischen Energiespeichern auf verschiedene Art und Weise zu realisieren. Solche Schichtenladevorrichtungen können sowohl fixe als auch variable Be- und Entladesysteme sein.

Aus der Druckschrift JP S58 72838 A ist ein Wärmespeicher bekannt, in dessen oberen bzw. unteren Bereich radiale Diffusoren vorgesehen sind, in welche jeweils zentral eine Wasserversorgungsleitung bzw. eine Wasserentnahmeleitung führt. Die radialen Diffusoren sind aus zueinander parallelen horizontalen Scheiben ausgebildet, zwischen welchen sich senkrechte Führungsplatten radial bis zum äußersten Scheibenende erstrecken.
Die Druckschrift EP 1 489 374 A1 beinhaltet einen Warmwasserspeicher mit einem Speicherbehälter, in den oben ein Warmwasserzuführrohr und unten ein Kaltwasserzuführrohr münden. Die Mündungsöffnung des Warmwasserzuführrohres ist von einer Lochdose und die Mündungsöffnung des Kaltwasserzuführrohres ist von einer Schlitzdose umgeben.

Die Druckschrift DE3819317 offenbart einen radialen Diffusor mit einem am Rand des Diffusors angebrachten Lochplattenring. Be- und Entladesysteme mit fixer Beladehöhe, wie zum Beispiel in bestimmten Höhen vorgesehene radiale Diffusoren, eignen sich insbesondere für den Einsatz bei näherungsweise konstanten Vor- und Rücklauftemperaturen. Das ist beispielsweise bei Kältespeichern der Fall. Bei diesen Konstruktionen wird die Eintrittsgeschwindigkeit des Fluids in den Speicher durch einen möglichst großen Gesamtquerschnitt der Austrittsöffnungen stark verringert und somit die Vermischung mit dem in dem Speicher befindlichen Fluid minimiert. Eine Einschichtung von Fluid mit variabler Temperatur in die jeweilige Schicht ist bei derartigen Systemen beispielsweise durch in der Höhe veränderbare bzw. schwimmende Tassen möglich. Andernfalls steigt oder sinkt das Fluid nach dem Eintritt in den Speicher entsprechend seiner Temperatur auf bzw. ab und es kommt entlang des Strömungsweges zu einer Vermischung mit dem Speicherfluid. Diese Systeme sind prinzipiell für Speicher ab einem Volumen von ca. 50 m³ geeignet.

Bedingt durch die vielfältigen Einflussgrößen auf die Strömungsvorgänge in sogenannten Schichtenladevorrichtungen bzw. in thermischen Speichern weisen die bekannten Be- bzw. Entladesysteme für thermische Speicher mehr oder weniger gute Schichtungscharakteristiken für das einströmende Fluid auf. Von großem Einfluss ist dabei die Intensität der Mischvorgänge im Beladesystem, an den Auslässen sowie dem umliegenden Gebiet als auch im Speicher.

Be- und Entladeeinrichtungen sollen in vielen Fällen den Fluidimpuls und den Fluiddrehimpuls abbauen, Turbulenzen vermeiden bzw. die Turbulenzgeneration unterdrücken sowie konvektive und turbulente Mischeffekte im Speicher minimieren.

Werden bei Be- und Entladesystemen für thermische Speicher mehrere Diffusoren eingesetzt, muss in der Regel der gesamte ein- oder auszuleitende Volumenstrom auf eine Vielzahl von Teilstrecken, die durch Verteilleitungen entstehen, gleichmäßig verteilt werden. Die Einströmung von den jeweiligen Rohrleitungen in die Diffusoren und umgekehrt wird durch den jeweiligen Aufbau der Strömungskanäle, welche sich in Rohrleitungen, Verzweigungen und den Diffusoren selbst ausbilden, wesentlich beeinflusst. Dies zeigt sich insbesondere in nicht idealen Ausströmungen, welche z. B. durch Rezirkulation und Injektion am Auslass bewirkt werden. Damit ist beispielsweise bei den im Stand der Technik bekannten Kältespeichern eine ideale Be- und Entladung nicht möglich, was im Extremfall zum Versagen der angestrebten Speicherbetriebsweise führen kann.

Es ist daher die Aufgabe der vorliegenden Erfindung, ein Be- und/oder Entladesystem für einen thermischen Energiespeicher zur Verfügung zu stellen, mit welchem Flüssigkeit gleichmäßig in den bzw. aus dem Flüssigkeitsbehälter geleitet werden kann, so dass eine gute geschichtete Be- und Entladung eines thermischen Energiespeichers gewährleistet werden kann.
Die Aufgabe wird erfindungsgemäß dadurch gelöst, dass zwischen den Diffusorplatten wenigstens ein Einsatz vorgesehen ist, der einen Strömungswiderstand aufweist, der größer als der Strömungswiderstand einer ungestörten Strömung zwischen den beiden Diffusorplatten ist, wobei der Einsatz derart vorgesehen ist, dass nach der Störung der Strömung durch den Strömungswiderstand, den der Einsatz der Strömung entgegensetzt, sich die Strömung über den Umfang und der Höhe des zwischen den Diffusorplatten aufgespannten Bereichs des Diffusors wieder neu ausbildet. Mit Hilfe des erfindungsgemäßen Be- und/oder Entladesystems kann eine Gleichverteilung des Volumenstroms der ein- bzw. auszuleitenden Flüssigkeit zwischen den verschiedenen Be- und Entladetassen des Systems bezogen auf den jeweiligen Umfang des Diffusors erzielt werden. Durch den definiert einstellbaren hohen Strömungswiderstand kann man erreichen, dass eine Strähnenbildung, bei welcher der Volumenstrom lokal begrenzt austritt, weitgehend vermieden werden kann. Da typischerweise ein aus dem inneren Bereich des Diffusors austretender Strahl mit hoher Strömungsgeschwindigkeit senkrecht auf die gegenüberliegende Wand einer Diffusorplatte des Diffusors trifft, sich an diese Wand daraufhin anlegt und sich unter Umständen ablöst, erzeugt der zwischen die Diffusorplatten eintretende Strahl eine ungleichförmige und/oder instationäre Strömung. Mit dem erfindungsgemäßen Be- und/oder Entladesystem wird vermieden, dass sich diese ungleichförmige Strömung bis zum Auslass des Diffusors fortpflanzt und damit zu unerwünschten Ausströmverhältnissen führt. Stattdessen kann ein gleichmäßiges Eintreten des Volumenstroms in den Flüssigkeitsbehälter bzw. auch in umgekehrter Strömungsrichtung im Diffusor ein definiertes Eintreten der Strömung in den Innenbereich des Diffusors erzielt werden, wodurch eine gute Be- und/oder Entladung des thermischen Energiespeichers durch die gleichmäßige Ein- bzw. Ausschichtung der Flüssigkeit erreicht werden kann.
Die erfindungsgemäße Ausgestaltung des Be- und/oder Entladesystems zeigt insbesondere Vorteile im Vergleich zu den im Stand der Technik bekannten Lösungen bei einem Beladen eines Flüssigkeitsspeichers. Der Ansaugbetrieb ist allgemein unkritischer.
In einer vorteilhaften Ausführungsform der vorliegenden Erfindung weist der Einsatz wenigstens ein kreisförmig zwischen den Diffusorplatten angeordnetes Lochelement auf. Das Lochelement ist ein Strömungswiderstand mit einer Vielzahl von Öffnungen mit geringem Durchmesser und kann beispielsweise ein Lochblech sein. Die in dem Lochelement vorgesehenen Löcher sind nicht zwangsweise kreisförmig sondern können beliebige Querschnitte aufweisen. Vorzugsweise sollten jedoch die in dem Lochelement vorgesehenen Aussparungen etwa gleichmäßig über das Lochelement verteilt sein. Durch die Aussparungen in dem Lochelement kann die Flüssigkeit aus dem bzw. in den Diffusor aus- bzw. einströmen, wobei sich die Strömung nach dem Durchströmen des Lochelementes radial ausrichtet und gut über die Diffusorhöhe verteilbar ist. Darüber hinaus beruhigt sich die Strömung beim Durchströmen der Lochbleche.
Grundsätzlich ist es auch möglich, als Lochelement ein Sieb einzusetzen, wobei hier jedoch die Gefahr besteht, dass sich das Sieb allmählich zusetzt.
Vorzugsweise sollten wenigstens zwei Lochbleche nacheinander in Strömungsrichtung zwischen den Diffusorplatten vorgesehen sein, um die Strömung über die gesamte Strecke zwischen den Diffusorplatten beruhigen zu können. Der Abstand der Lochbleche ist dabei abhängig von Druckverlusten und von der Dimension der Be- bzw. Entladetasse.
Um eine gleichmäßige Massenstromverteilung zu erreichen, empfiehlt sich eine Porenweite des bzw. der Lochelemente(s) von etwa 2 mm bis etwa 10 mm. Im Wesentlichen ist es hierfür ausreichend, dass die Poren oder Lochelemente über eine möglichst große Fläche, die durchströmt wird, verteilt sind. Dabei ist es möglich, dass am Rand der durchströmten Flächen Störungen in der Massenstromverteilung auftreten, welche jedoch im Vergleich zur Gesamtströmungsausrichtung untergeordnet sind.
Gemäß einem weiteren bevorzugten Beispiel der vorliegenden Erfindung weist der Einsatz wenigstens ein kreisförmig zwischen den Diffusorplatten angeordnetes Gitter auf. Das Gitter ist ebenfalls gut geeignet, um eine radiale Stromrichtung der durchfließenden Flüssigkeit zu erzwingen. Darüber hinaus kann durch das Gitter der radiale Volumenstrom gut über den Umfang und die Höhe des zwischen den Diffusorplatten aufgespannten Diffusorraums verteilt werden.

Entsprechend einer anderen, nicht zur Erfindung gehörenden Variante weist der Einsatz mehrere, sich radial zwischen den Diffusorplatten erstreckende Leitelemente auf. Als Leitelemente kommen beispielsweise längs liegende Leitbleche in Betracht. Durch die Leitelemente kann der Volumenstrom radial gleichverteilt von dem Diffusorinneren nach außen und umgekehrt geleitet werden, so dass eine gleichmäßige Strömungsverteilung beim Ein- bzw. Austritt des Diffusors realisiert werden kann.
In einer ebenfalls günstigen Ausführungsform der vorliegenden Erfindung weist der Einsatz wenigstens ein kreisförmig zwischen den Diffusorplatten angeordnetes Element auf, das zumindest teilweise aus einem offenporigen Schaum ausgebildet ist. Als offenporiger Schaum kann beispielsweise Metallschaum eingesetzt werden. Indem der Volumenstrom den offenporigen Schaum durchströmt, kann er gleichmäßig radial, sowohl über den Radius als auch über die Höhe, ausgerichtet werden und gut über die Diffusorhöhe verteilt werden.
Vorzugsweise wird der Energiespeicher, bei dem das erfindungsgemäße Be- und/oder Entladesystem verwendet wird, für die Wärme- und/oder Kälteversorgung in sogenannten Wärme- bzw. Kältespeichern eingesetzt. Da durch das erfindungsgemäße Be- und/oder Entladesystem eine definierte Ein- bzw. Ausschichtung von Flüssigkeit in einem thermischen Energiespeicher realisierbar ist, ist es insbesondere für Kältespeicher gut geeignet, da die Effizienz solcher Speicher besonders davon abhängt, dass ungewollte Vermischungen von Flüssigkeiten mit voneinander abweichender Temperatur beim Ein- bzw. Ausschichten von Flüssigkeit in dem Energiespeicher weitgehend vermieden werden. Mit dem erfindungsgemäßen Be- und/oder Entladesystem kann insbesondere kalte oder warme Flüssigkeit, wie kaltes oder warmes Wasser, zu Beginn der Beladung gut unten bzw. oben in den Speicher eingeschichtet werden, so dass in dem Kältespeicher eine vorteilhafte thermische Schichtung vorgenommen werden kann.
Die Aufgabe wird ferner durch ein Verfahren zum Be- und/oder Entladen eines thermischen Energiespeichers gelöst, wobei über wenigstens eine Flüssigkeitsleitung, die in einen radialen Diffusor mündet, Flüssigkeit in einen bzw. aus einem Flüssigkeitsbehälter des thermischen Energiespeichers geleitet wird, und wobei der Strömung der Flüssigkeit durch wenigstens einen Einsatz zwischen sich radial von einem zentralen Bereich des Diffusors erstreckenden Diffusorplatten ein Strömungswiderstand entgegengesetzt wird, der höher als der Strömungswiderstand einer ungestörten Strömung zwischen den Diffusorplatten ist, wobei der Einsatz derart vorgesehen ist, dass nach der Störung der Strömung durch den Strömungswiderstand, den der Einsatz der Strömung entgegensetzt, sich die Strömung über den Umfang und der Höhe des zwischen den Diffusorplatten aufgespannten Bereichs des Diffusors wieder neu ausbildet. Durch diese Vorgehensweise kann der Volumenstrom einer in den Energiespeicher ein bzw. austretenden Flüssigkeit über den gesamten Umfang des Ein- bzw. Auslasses gleichmäßig verteilt werden. Nach der Störung der Strömung durch den Strömungswiderstand, den der Einsatz der Strömung entgegensetzt, muss sich die Strömung über dem Umfang und der Höhe des zwischen den Diffusorplatten aufgespannten Bereichs des Diffusors wieder neu ausbilden. Dabei kann in Abhängigkeit von der Ausbildung des Einsatzes eine gute Verteilung des radialen Volumenstroms über die Diffusorhöhe und eine radiale Stromrichtung erzwungen werden. Das gilt für beide Strömungsrichtungen im Diffusor. Mit dem erfindungsgemäßen Verfahren werden die Auslässe bzw. der äußerste Bereich des Diffusors nicht mit einem Einsatz bestückt, da die mittleren Geschwindigkeiten in einem solchen Einsatz abhängig von der Flächen- bzw. Volumenporosität steigen und lokal Turbulenz bzw. Wirbel generieren. Im äußeren Bereich des Diffusors sollen hingegen, insbesondere beim Ausströmen, die kleinskaligen Instationaritäten abklingen.
Vorteilhafte Ausführungsformen der vorliegenden Erfindung werden im Folgenden anhand der Figuren der Zeichnung näher erläutert, wobei
- Figur 1, 2, 3 und 4: schematisch mögliche Ausführungsvarianten von Be- und/oder Entladesystemen in thermischen Energiespeichern zeigen;
- Figur 5: eine schematische Darstellung von Verteilleitungen und Diffusoren in einer Draufsicht auf einen thermischen Energiespeicher zeigt;
- Figur 6: schematisch einen radialen Diffusor des erfindungsgemäßen Be und/oder Entladesystems für einen thermischen Energiespeicher zeigt, bei welchem zwischen Diffusorplatten des Diffusors Strömungsleiteinrichtungen in Form von Lochelementen vorgesehen sind;
- Figur 7: schematisch veranschaulicht, wie gemäß einer Ausführungsform der vorliegenden Erfindung Lochelemente in Form von Lochblechen zwischen den Diffusorplatten angeordnet sein können; und
- Figur 8: schematisch eine weitere, nicht zur Erfindung gehörende Variante zeigt, bei welcher zwischen den Diffusorplatten eines Diffusors Strömungsleiteinrichtungen in Form von radial ausgerichteten Leitblechen vorgesehen sind.

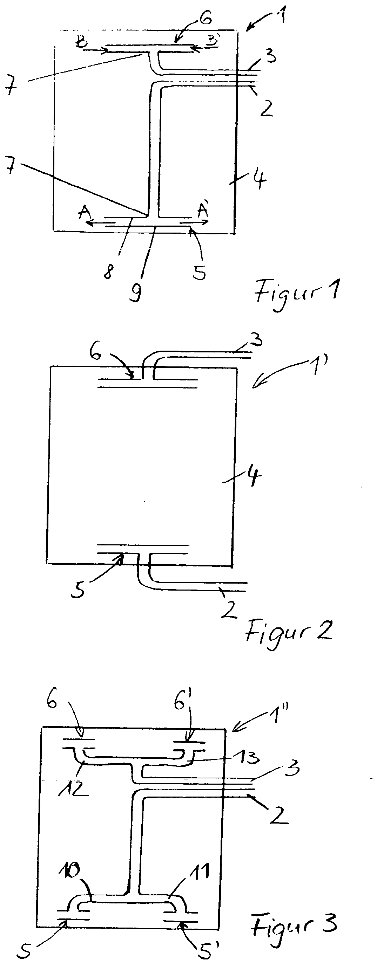

Die Figuren 1 bis 4 veranschaulichen schematisch mögliche Varianten von Be- und/oder Entladeeinrichtungen für thermische Energiespeicher 1, 1' 1", 1"'. Neben den gezeigten Konstruktionen ist eine Vielzahl weiterer Varianten zur Be- und Entladung von thermischen Speichern möglich.

Gemäß der in Figur 1 dargestellten Ausführungsvariante führen Rohrleitungen 2, 3 in das Innere eines Flüssigkeitsbehälters 4 des thermischen Energiespeichers 1. Die Rohrleitung 2 ist ein Flüssigkeitszulauf, die Rohrleitung 3 ist ein Flüssigkeitsablauf. Der Flüssigkeitszulauf 2 mündet in eine unten in dem Flüssigkeitsbehälter 4 vorgesehene Beladetasse 5. Der Flüssigkeitsablauf 3 mündet in eine oben in dem Flüssigkeitsbehälter 4 vorgesehene Entladetasse 6.

Die Be- und Entladetassen 5, 6 sind jeweils in Form radialer Diffusoren ausgebildet. Sie weisen jeweils einen zentral angeordneten und mit der Verteilleitung bzw. Rohrleitung 2, 3 verbundenen Diffusoranschlussbereich 7 und sich radial von dem Diffusoranschlussbereich 7 erstreckende, voneinander beabstandete Diffusorplatten 8, 9 auf.

Flüssigkeit, die durch die Rohrleitung 2 in die Beladetasse 5 geleitet wird, strömt aus dieser, wie durch die Pfeile A, A' angedeutet, seitlich in das Innere des Flüssigkeitsbehälters 4 aus. Umgekehrt strömt in die Entladetasse 6 entsprechend der mit den Pfeilen B, B' angedeuteten Bewegungsrichtungen Flüssigkeit aus dem Inneren des Flüssigkeitsbehälters 4 in die Entladetasse 6 und wird durch die Rohrleitung 3 aus dem Flüssigkeitsbehälter 4 herausgeleitet.

Die in dem thermischen Energiespeicher 1 verwendeten Be- und Entladetassen 5, 6 weisen eine fixe Beladehöhe auf und sind sowohl für kleine als auch für große Speicher geeignet.

Figur 2 zeigt schematisch eine weitere mögliche Ausführungsvariante des erfindungsgemäßen Be- und/oder Entladesystems für einen thermischen Energiespeicher 1'. Auch hier werden Rohrleitungssysteme 2, 3 zum Ein- bzw. Ausleiten von Flüssigkeit aus dem Flüssigkeitsbehälter 4 verwendet, wobei die Rohrleitungen 2, 3 in Be- bzw. Entladetassen 5, 6 münden, welche grundsätzlich wie die Be- bzw. Entladetassen 5, 6 aus Figur 1 aufgebaut sind.

Im Gegensatz zu der in Figur 1 gezeigten Konstruktion führen die Rohrleitungen 2, 3 der in

Figur 2 gezeigten Ausführungsvariante nicht in das Innere des Flüssigkeitsbehälters 4 sondern sind mit den Be- und Entladetassen 5, 6 von außen, seitlich des Flüssigkeitsbehälters 4 verbunden.

Figur 3 zeigt schematisch eine weitere Ausführungsform des erfindungsgemäßen Be- und/oder Entladesystems für einen thermischen Energiespeicher 1".

In der in Figur 3 gezeigten Ausführungsvariante münden die Rohrleitungen 2, 3 zunächst in Flüssigkeits- bzw. Verteilleitungen 10, 11, 12, 13, welche wiederum in mehrere Be- bzw. Entladetassen 5, 5', 6, 6' münden, die in Form radialer Diffusoren ausgebildet sind. In Figur 3 sind lediglich zur Veranschaulichung jeweils zwei Ladetassen 5, 5' und zwei Entladetassen 6, 6' gezeigt. Es können jedoch auch weitaus mehr als zwei Beladetassen und zwei Entladetassen vorgesehen sein. Beispielsweise können gemäß der vorliegenden Erfindung jeweils sechs symmetrisch angeordnete Beladetassen 5 und 6 symmetrisch angeordnete Entladetassen 6 vorgesehen sein. Auch ist es möglich, dass die Rohrleitungen 2, 3 nicht, wie in Figur 3 gezeigt, im Inneren des Flüssigkeitsbehälters 4 verlaufen, sondern, wie in Figur 2 dargestellt, von außen über Verteilleitungen in die jeweiligen Diffusoren münden.

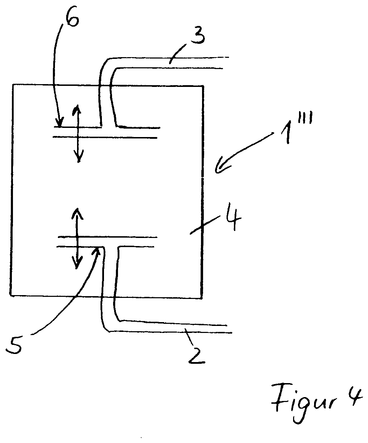

Figur 4 zeigt schematisch eine weitere Ausführungsvariante des erfindungsgemäßen Be- und/oder Entladesystems für einen thermischen Energiespeicher 1"'. Der Energiespeicher 1"' ist im Wesentlichen ähnlich wie der Energiespeicher 1' aus Figur 2 aufgebaut, weist jedoch in der Höhe veränderbare Be- und Entladetassen 5, 6 auf. Durch die in der Höhe veränderbaren bzw. schwimmenden Tassen 5, 6 kann das Ein- bzw. Austreten des Fluids entsprechend seiner Temperatur in dem Speicher 1 '" vorteilhaft geschichtet werden.

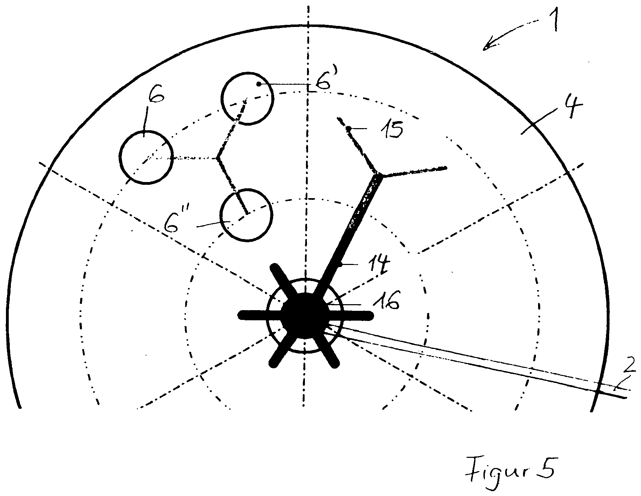

Figur 5 zeigt schematisch eine Anordnung von Flüssigkeits- bzw. Verteilleitungen 14, 15 und Diffusoren 6, 6', 6" in einer Draufsicht auf einen Flüssigkeitsbehälter 4 eines thermischen Energiespeichers 1. Ausgehend von einer Verteilkammer 16, welche in dem gezeigten Beispiel zentral in dem Flüssigkeitsbehälter 4 vorgesehen ist und in welche eine Hauptleitung 2 mündet, zweigen jeweils gleichmäßig nach allen Richtungen sechs Verteilleitungen 14 ab, welche wiederum in Verteilleitungen 15 münden, die mit den radialen Diffusoren 6, 6', 6" verbunden sind. Die in Figur 5 gezeigte Darstellung dient lediglich der Illustration der in einem thermischen Energiespeicher vorhandenen Verteilmechanismen, wobei die Anzahl und Anordnung der Verteilleitungen und Diffusoren von der in Figur 5 gezeigten Anordnung in den verschiedenen Ausführungsvarianten der vorliegenden Erfindung verschieden sein kann.

Wie es aus Figur 5 ersichtlich ist, ist es, um eine gleichmäßige Ein- bzw. Ausschichtung von Flüssigkeit in den bzw. aus dem Flüssigkeitsbehälter 4 durch die Diffusoren 6, 6', 6" zu erreichen, notwendig, den gesamten Volumenstrom der Flüssigkeit auf alle Teilstrecken bzw. Verteilleitungen 14, 15 gleich zu verteilen. In speziellen Ausführungsvarianten der vorliegenden Erfindung sind jedoch auch abweichende Verhältnisse denkbar. Die Einströmung von der Verteilkammer 16 in die Verteilleitungen 14, 15 und von dort in die Diffusoren 6, 6', 6" und umgekehrt wird durch den jeweiligen Aufbau der Strömungskanäle, das heißt der Rohrleitungen, der Verzweigungen und der Diffusoren, stark beeinflusst.

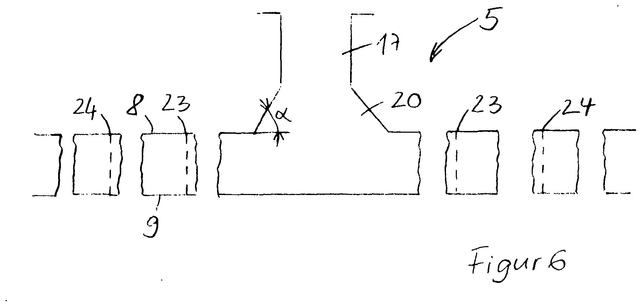

Figur 6 zeigt schematisch einen Diffusor 5 mit einer Ausführungsvariante des erfindungsgemäßen Be- und/oder Entladesystems. Der Diffusor 5 kann sowohl als Be- als auch als Entladetasse für das erfindungsgemäße Be- und/oder Entladesystem eingesetzt werden.

Der Diffusor 5 besitzt einen zentral angeordneten Anschlussbereich, mit welchem er mit einer Verteilleitung des erfindungsgemäßen Be- und/oder Entladesystems verbunden ist. Der Diffusoranschlussbereich weist einen Flansch 17 auf, welcher im Wesentlichen zylinderförmig ausgebildet ist und an welchem sich eine kegelförmig aufweitende Misch- bzw. Verteilkammer 20 anschließt. Ausgehend von der Misch- bzw. Verteilkammer 20 erstrecken sich von dem Diffusoranschlussbereich voneinander beabstandete Diffusorplatten 8, 9 radial nach außen. Anstelle der in Figur 6 gezeigten Diffusorplatte 9 kann auch eine Wand oder ein Boden des Flüssigkeitsbehälters 4 des thermischen Energiespeichers 1 verwendet werden, wobei dann in einem dem zentralen Diffusoranschlussbereich gegenüberliegenden Bereich eine Prallplatte an der Wand bzw. dem Boden des Flüssigkeitsbehälters 4 vorgesehen ist.

Die Diffusorplatten 8, 9 sind beispielsweise mittels in ihrer Höhe einstellbarer Distanzschrauben voneinander beabstandet. Die Distanzschrauben sind an mehreren Stellen über den Querschnitt der Diffusorpiatten 8, 9 verteilt vorgesehen. Beispielsweise kann zwischen den Diffusorplatten 8, 9 ein Abstand von etwa 100 mm eingestellt werden. In anderen, nicht gezeigten Ausführungsvarianten der vorliegenden Erfindung kann auch ein anderer Abstand eingestellt werden.

In dem Übergangsbereich von der Misch- bzw. Verteilkammer 20 zu dem Innenraum zwischen den Diffusorplatten 8, 9 weist die Misch- bzw. Verteilkammer 20 einen Durchmesser von etwa 400 mm auf. Der Kegelwinkel α beträgt in der gezeigten Ausführungsvariante 45°. Der Durchmesser des zylinderförmigen Flansches 17 beträgt in dem gezeigten Beispiel etwa 150 mm. Die genannten Maße und Winkel können jedoch in Abhängigkeit von der jeweiligen Ausführungsform der vorliegenden Erfindung breit variieren.

Die Diffusorplatten 8, 9 bestehen vorzugsweise aus Stahl oder glasfaserverstärktem Kunststoff.

Wie in Figur 6 gezeigt, sind in Abständen zwischen den Diffusorplatten 8, 9 Einsätze in Form kreisförmig zwischen den Diffusorplatten 8, 9 angeordneter Lochelemente 23, 24 vorgesehen. Die Lochelemente 23, 24 weisen einen Strömungswiderstand auf, der größer als der Strömungswiderstand einer ungestörten Strömung zwischen den beiden Diffusorplatten 8, 9 ist. In dem gezeigten Beispiel sind die Lochelemente 23, 24 Lochbleche, welche Öffnungen mit relativ kleinen Durchmessern aufweisen. Beispielsweise kann die Porenweite der Löcher in den Lochblechen etwa 2 mm bis etwa 10 mm betragen. Grundsätzlich können anstelle der Lochbleche 23, 24 auch Siebe eingesetzt werden, welche sich jedoch mit der Zeit zusetzen.

Anstelle der gezeigten zwei Lochelemente 23, 24 können auch ein oder mehr als zwei Lochbleche vorgesehen werden. Durch die Lochbleche 23, 24 wird eine Beruhigung der durch die Lochbleche 23, 24 hindurchtretenden Strömung erreicht, so dass weitgehend eine Ausbildung von Wirbeln in dem Bereich zwischen den Diffusorplatten 8, 9 vermieden werden kann.

In einem anderen, nicht gezeigten Beispiel der vorliegenden Erfindung können anstelle der Lochbleche 23, 24 grundsätzlich alle Arten von porösen Elementen, wie zum Beispiel auch ein oder mehrere Gitter, eingesetzt werden.

Auch wenn in der Darstellung von Figur 6 die Lochelemente 23, 24 als Flächenelemente dargestellt sind, können auch Volumenelemente, wie zum Beispiel offenporige Schäume, als poröse Stoffsysteme zwischen den Diffusorplatten 8, 9 eingesetzt werden.

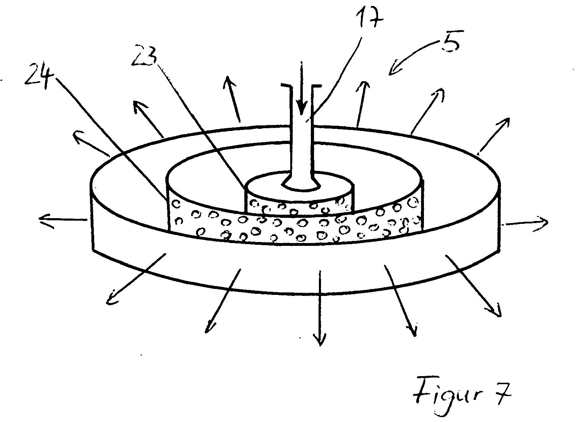

Figur 7 zeigt schematisch die in Figur 6 gezeigte Anordnung in einer perspektivischen Ansicht. Ein durch den Diffusoranschlussbereich eintretender Flüssigkeitsstrahl kann entsprechend der durch die Pfeile gezeigten Strömungsrichtungen radial nach außen, weitgehend ohne Wirbelbildung aus dem Diffusor 5 austreten. Umgekehrt kann auch in den Diffusor 5 einströmende Flüssigkeit definiert ausgerichtet werden.
Entsprechend ist eine sehr gleichmäßige Ein- bzw. Ausschichtung von Flüssigkeit mit der erfindungsgemäßen Be- und/oder Entladeeinrichtung in einen thermischen Energiespeicher möglich.

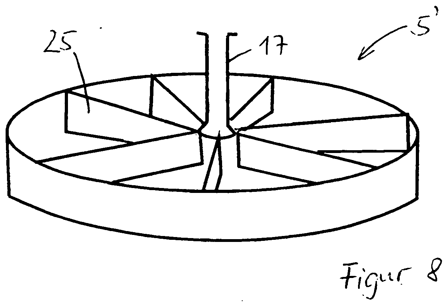

Figur 8 zeigt schematisch eine weitere, nicht zur Erfindung gehörende Variante, wobei in dem Diffusor 5' radial von dem Diffusoranschlussbereich sich nach außen erstreckende Leitbleche 25 vorgesehen sind. Die Anzahl der Leitbleche 25 ist in Abhängigkeit von der jeweiligen Ausführungsvariante der vorliegenden Erfindung variabel. Es sollte jedoch eine Mindestanzahl an Leitblechen 25 vorgesehen werden, um der ein- bzw. austretenden Strömung eine radiale Ausrichtung verleihen zu können. Die Leitbleche 25 wirken als Leiteinrichtungen für die in den Diffusor 5' bzw. aus dem Diffusor 5' ein- bzw. austretende Flüssigkeit, so das seine Ausbildung von Wirbeln weitgehend vermieden werden kann und eine definierte Ein- bzw. Ausschichtung von Flüssigkeit in den bzw. aus dem Flüssigkeitsbehälter 4 eines thermischen Energiespeichers ermöglicht werden kann.

## Patentansprüche

1. Be- und/oder Entladesystem für einen thermischen Energiespeicher (1, 1', 1 ", 1 "') mit einem Flüssigkeitsbehälter (4) mit wenigstens einem Flüssigkeitszulauf (2) und wenigstens einem Flüssigkeitsablauf (3), wobei der Flüssigkeitszulauf (2) und/oder der Flüssigkeitsablauf (3) wenigstens eine Flüssigkeitsleitung (10, 11, 12, 13) aufweist, die in einen radialen Diffusor (5, 6) mündet, durch welchen Flüssigkeit in den bzw. aus dem Flüssigkeitsbehälter (4) geleitet wird, und wobei der Diffusor (5, 6) einen zentral angeordneten und mit der Flüssigkeitsleitung (10, 11, 12, 13) verbundenen Diffusoranschlussbereich und zwei sich radial von dem Diffusoranschlussbereich erstreckende, voneinander beabstandete Diffusorplatten (8, 9) aufweist, und zwischen den Diffusorplatten (8, 9) wenigstens ein Einsatz vorgesehen ist, der einen Strömungswiderstand aufweist, der größer als der Strömungswiderstand einer ungestörten Strömung zwischen den beiden Diffusorplatten (8, 9) ist, wobei der Einsatz wenigstens ein kreisförmig zwischen den Diffusorplatten (8, 9) angeordnetes Lochelement (23, 24) oder wenigstens ein poröses Element aufweist oder der Einsatz wenigstens ein kreisförmig zwischen den Diffusorplatten (8, 9) angeordnetes Gitter aufweist oder der Einsatz wenigstens ein kreisförmig zwischen den Diffusorplatten (8, 9) angeordnetes Element aufweist, das zumindest teilweise aus einem offenporigen Schaum ausgebildet ist, **dadurch gekennzeichnet, dass** der äußerste Bereich des Diffusors (5, 6) nicht mit einem Einsatz bestückt ist, und der Einsatz derart vorgesehen ist, dass nach der Störung der Strömung durch den Strömungswiderstand, den der Einsatz der Strömung entgegensetzt, sich die Strömung über den Umfang und der Höhe des zwischen den Diffusorplatten (8, 9) aufgespannten Bereichs des Diffusors (5, 6) wieder neu ausbildet.

2. Be- und/oder Entladesystem nach Anspruch 1, **dadurch gekennzeichnet, dass** wenigstens zwei Lochbleche (23, 24) kreisförmig zwischen den Diffusorplatten (8, 9) angeordnet sind.

3. Be- und/oder Entladesystem nach Anspruch 1, **dadurch gekennzeichnet, dass** das Lochelement (23, 24) eine Porenweite von etwa 2 mm bis etwa 10 mm aufweist.

4. Verfahren zum Be- und/oder Entladen eines thermischen Energiespeichers (1, 1', 1", 1"') wobei über wenigstens eine Flüssigkeitsleitung (10, 11, 12, 13), die in einen radialen Diffusor (5, 6) mündet, Flüssigkeit in einen bzw. aus einem Flüssigkeitsbehälter (4) des thermischen Energiespeichers (1, 1', 1 ", 1 "') geleitet wird, und wobei der Strömung der Flüssigkeit durch wenigstens einen Einsatz zwischen sich radial von einem zentralen Bereich des Diffusors (5, 6) erstreckenden Diffusorplatten (8, 9) ein Strömungswiderstand entgegengesetzt wird, der höher als der Strömungswiderstand einer ungestörten Strömung zwischen den Diffusorplatten (8, 9) ist, wobei der Einsatz wenigstens ein kreisförmig zwischen den Diffusorplatten (8, 9) angeordnetes Lochelement (23, 24) oder wenigstens ein poröses Element aufweist oder der Einsatz wenigstens ein kreisförmig zwischen den Diffusorplatten (8, 9) angeordnetes Gitter aufweist oder der Einsatz wenigstens ein kreisförmig zwischen den Diffusorplatten (8, 9) angeordnetes Element aufweist, das zumindest teilweise aus einem offenporigen Schaum ausgebildet ist, **dadurch gekennzeichnet, dass** der äußerste Bereich des Diffusors (5, 6) nicht mit einem Einsatz bestückt wird, und der Einsatz derart vorgesehen wird, dass nach der Störung der Strömung durch den Strömungswiderstand, den der Einsatz der Strömung entgegensetzt, sich die Strömung über den Umfang und der Höhe des zwischen den Diffusorplatten (8, 9) aufgespannten Bereichs des Diffusors (5, 6) wieder neu ausbildet.

## Claims

1. Charging and/or discharging system for a thermal energy storage (1, 1', 1", 1"') with a liquid container (4) having at least one liquid inlet (2) and at least one liquid outlet (3), wherein the liquid inlet (2) and/or the liquid outlet (3) comprise at least one liquid line (10, 11, 12, 13), which opens into a radial diffuser (5, 6), through which liquid is led into respectively out of the liquid container (4), and wherein the diffuser (5, 6) comprises a centrally arranged diffuser connection area being connected with the liquid line (10, 11, 12, 13) and two spaced apart diffuser plates (8, 9) radially extending from the diffuser connection area, and at least one insert is provided between the diffuser plates (8, 9), which shows a flow resistance being higher than the flow resistance of an undisturbed flow between the two diffuser plates (8, 9),
wherein the insert comprises at least one perforation element (23, 24) arranged circularly between the diffuser plates (8, 9) or at least one porous element or the insert comprises at least one grid arranged circularly between the diffuser plates (8, 9) or the insert comprises at least one element arranged circularly between the diffuser plates (8, 9), which is at least partly made of an open-pored foam,
**characterized in that**
the outermost part of the diffuser (5, 6) is not equipped with an insert, and the insert is provided in such a way that after the disturbance of the flow through the flow resistance, which the insert sets against the flow, the flow is renewing itself over the circumference and the height of the area of the diffuser (5, 6) stretched between the diffuser plates (8, 9).

2. Charging and/or discharging system according to claim 1, **characterized in that** the at least two perforated plates (23, 24) are arranged circularly between the diffuser plates (8, 9).

3. Charging and/or discharging system according to claim 1, **characterized in that** the perforation element (23, 24) comprises a pore width of about 2 mm to about 10 mm.

4. Method for charging and/or discharging a thermal energy storage (1, 1', 1", 1"'), wherein through at least one liquid line (10, 11, 12, 13), opening into a radial diffuser (5, 6), liquid is led into respectively out of a liquid container (4) of the thermal energy storage (1, 1', 1", 1"'), and wherein, by means of at least one insert between diffuser plates (8, 9) radially extending from a central part of the diffuser (5, 6), a flow resistance being higher than the flow resistance of an undisturbed flow between the diffuser plates (8, 9), is set against the flow of the liquid,
wherein
the insert comprises at least one perforation element (23, 24) arranged circularly between the diffuser plates (8, 9) or at least one porous element or the insert comprises at least one grid arranged circularly between the diffuser plates (8, 9) or the insert comprises at least one element arranged circularly between the diffuser plates (8, 9), which is partly formed of an open-pored foam,
**characterized in that**
the outermost part of the diffuser (5, 6) is not equipped with an insert, and the insert is provided in such a way that after the disturbance of the flow through the flow resistance, which the insert sets against the flow, the flow is renewing itself over the circumference and the height of the area of the diffuser (5, 6) stretched between the diffuser plates (8, 9).

## Revendications

1. Système de chargement et/ou de déchargement pour un accumulateur d'énergie thermique (1, 1', 1", 1"') comprenant un réservoir de liquide (4) ayant au moins une entrée de liquide (2) et au moins une sortie de liquide (3), dans lequel l'entrée de liquide (2) et/ou la sortie de liquide (3) présentent au moins une conduite de liquide (10, 11, 12, 13) qui débouche dans un diffuseur radial (5, 6) et via laquelle du liquide est amené dans le réservoir de liquide (4) ou en est sorti, et dans lequel le diffuseur (5, 6) présente une zone de raccordement du diffuseur placée de manière centrale et raccordée à la conduite de liquide (10, 11, 12, 13) et deux plaques (8, 9) de diffuseur s'étendant dans le sens radial par rapport à la zone de raccordement du diffuseur et espacées l'une de l'autre, et au moins un insert présentant une résistance à l'écoulement supérieure à la résistance à l'écoulement d'un écoulement non perturbé est prévu entre les deux plaques (8, 9) de diffuseur,
dans lequel l'insert présente au moins un élément perforé (23, 24) circulaire, placé entre les plaques de diffuseur (8, 9) ou au moins un élément poreux, ou l'insert présente au moins une grille circulaire placée entre les plaques (8, 9) de diffuseur ou l'insert présente au moins un élément circulaire placé entre les plaques de diffuseur (8, 9), lequel élément est constitué au moins en partie d'une mousse poreuse,
**caractérisé en ce que** la zone la plus à l'extérieur du diffuseur (5, 6) n'est pas dotée d'un insert, et que l'insert est prévu de telle sorte qu'après la perturbation de l'écoulement du fait de la résistance à l'écoulement que l'insert oppose à l'écoulement, l'écoulement se reforme sur la largeur et la hauteur de la zone du diffuseur (5, 6) s'étendant entre les plaques (8, 9) de diffuseur.

2. Système de chargement et/ou de déchargement selon la revendication 1
**caractérisé en ce qu'**au moins deux plaques perforées (23, 24) sont disposées de manière circulaire entre les plaques de diffuseur (8, 9).

3. Système de chargement et/ou de déchargement selon la revendication 1
**caractérisé en ce que** l'élément perforé (23, 24) présente un diamètre de pores d'environ 2 mm à environ 10 mm.

4. Procédé de système de chargement et/ou de déchargement d'un accumulateur d'énergie thermique (1, 1', 1", 1"') dans lequel du liquide est amené dans une réservoir de liquide (4) d'un accumulateur d'énergie thermique (1, 1', 1", 1"') ou en est sorti via au moins une conduite de liquide (10, 11, 12, 13) qui débouche dans un diffuseur radial (5, 6), et dans lequel une résistance à l'écoulement est opposée à l'écoulement du liquide du fait d'au moins un insert s'étendant dans le sens radial par rapport à une zone centrale du diffuseur (5, 6), laquelle résistance est plus élevée que la résistance à l'écoulement d'un écoulement non perturbé entre les plaques de diffuseur (8, 9),
dans lequel l'insert présente au moins un élément perforé (23, 24) circulaire, placé entre les plaques de diffuseur (8, 9) ou au moins un élément poreux, ou l'insert présente au moins une grille circulaire placée entre les plaques (8, 9) de diffuseur ou l'insert présente au moins un élément circulaire placé entre les plaques de diffuseur (8, 9), lequel élément est constitué au moins en partie d'une mousse poreuse,
**caractérisé en ce que** la zone la plus à l'extérieur du diffuseur (5, 6) n'est pas dotée d'un insert, et que l'insert est prévu de telle sorte qu'après la perturbation de l'écoulement du fait de la résistance à l'écoulement que l'insert oppose à l'écoulement, l'écoulement se reforme sur la largeur et la hauteur de la zone du diffuseur (5, 6) s'étendant entre les plaques (8, 9) de diffuseur.
